# EUROPÄISCHE PATENTSCHRIFT

(11) **EP 1 702 660 B1**
(45) Veröffentlichungstag und Bekanntmachung des Hinweises auf die Patenterteilung: **10.10.2007**
(21) Anmeldenummer: 06111239.7
(22) Anmeldetag: 16.03.2006
(51) Int. Cl.: B01D 17/02, B01D 35/05, E03F 5/16

(54) **Abscheidevorrichtung**
Separating device
Dispositif de séparation

(30) Priorität: 19.03.2005 DE 102005012718; 28.02.2006 DE 102006009542
(43) Veröffentlichungstag der Anmeldung: 20.09.2006
(73) Patentinhaber: Beko Technologies GmbH, 41468 Neuss (DE)
(72) Erfinder: Dipl.-Ing. Schlensker, Herbert, 51381, Leverkusen (DE)
(74) Vertreter: Kayser, Martin

(56) Entgegenhaltungen:
- WO-A-20/05105258
- DE-U1- 9 004 019

## Beschreibung

Die vorliegende Erfindung betrifft eine Abscheidevorrichtung zum Abscheiden einer ersten Flüssigkeit aus einer zweiten Flüssigkeit, wobei die erste Flüssigkeit eine geringere spezifische Dichte als die zweite Flüssigkeit aufweist, mit
- einem Behälter mit einer Innenwand,
- einem Einlass und einem Auslass, wobei der Einlass oberhalb des Auslasses angeordnet ist,
- einem Abscheidelement aus einem durchlässigen Filtermaterial, das
   o in der Lage ist, die erste Flüssigkeit zu adsorbieren und
   o innerhalb des Behälters zwischen dem Einlass und dem Auslass angeordnet ist,
   o derart ausgeführt ist, dass es im reinen Zustand auf der zweiten Flüssigkeit schwimmt, bei zunehmender Adsorption der ersten Flüssigkeit jedoch absinkt.

Derartige Abscheidevorrichtungen sind beispielsweise im Bereich von Druckluft notwendig. Druckluftkompressoren erzeugen Druckluft durch Ansaugen und Komprimieren von Umgebungsluft. Die enthaltene Luftfeuchtigkeit fällt als Kondensat physikalisch bedingt und durch Trocknung der Druckluft an. Dieses Kondensat ist ein Abwasser, das meist wegen dem Eintrag von Schmiermitteln des Druckluftkompressors nicht in den öffentlichen Abwasserkanal eingeleitet werden darf, weil es die Grenzwerte an Kohlenwasserstoffkonzentration übersteigt.

Bei einem Volumenstrom von 60 m³/h angesaugter Luft kann ein meist diskontinuierlicher Kondensatstrom von 1,6 l/h entstehen, der mit 300 mg/h Öl beladen sein kann, dies entspricht 190ppm. Die Bindung zwischen Wasser und Schmiermittel ist unterschiedlich und reicht von einem Gemisch von Öl und Wasser über Dispersion bis hin zur Emulsion. Die zulässigen Werte für die Einleitung in einen Schmutzwasserkanal in Deutschland liegen bei 20 bzw. 10, teilweise 5ppm. Somit stellt das Kondensat einen kostenaufwendig zu entsorgenden Sondermüll dar, weswegen verschiedene Verfahren und Vorrichtungen entwickelt wurden, die eine Trennung des enthaltenen Öls vom Wasser bewirken.

Vorrichtungen zum Abscheiden von Flüssigkeiten oder auch Trennvorrichtungen zum Trennen von Flüssigkeiten sind bekannt. Beispielsweise beschreibt das Gebrauchsmuster DE 90 040 19.8 eine Vorrichtung zum Absaugen von in einem Flüssigkeitsabscheider abgeschiedener Leichtflüssigkeit. Dieser weist ein Gehäuse auf, in dem wiederum ein Behälter angeordnet ist. In dem Behälter befindet sich ein Sack, der mit einem Ölbindemittel gefüllt ist. Das Ölbindemittel ist ein schwimmfähiges Granulat auf Polyurethan-Schaum-Basis. Das mit Leichtflüssigkeit verunreinigte Abwasser tritt durch die Eintrittsöffnung in das Gehäuse ein. Solange das Ölbindemittel in dem Behälter weitgehend ungesättigt ist, taucht der Behälter nur wenig in die Leichtflüssigkeitsschicht ein. Die Leichtflüssigkeit durchdringt den Behälter und den das Ölbindemittel enthaltenen Sack und wird vom Ölbindemittel adsorbiert. Mit zunehmender Sättigung des Ölbindemittels erhöht sich das Gewicht des Sacks, so dass der Behälter immer weiter absinkt. Hat der Behälter seine tiefste Position erreicht, ist das Ölbindemittel mit Leichtstoff weitgehend gesättigt und der Sack kann ausgetauscht werden. Die nicht adsorbierte Flüssigkeit tritt durch eine Auslassöffnung aus. Grundsätzlich ist das Prinzip dieser Vorrichtung sinnvoll, die Vorrichtung selbst ist jedoch sehr aufwendig und fehleranfällig. Beispielsweise ist nicht gewährleistet, dass auch tatsächlich der gesamte Volumenstrom des Flüssigkeitsgemisches durch den Sack fließt. Insofern ist eine vollständige Filterung nicht zwangsläufig gewährleistet.

Aufbauend auf dieser Vorrichtung beschreibt die DE 600 04 523 D2 ebenfalls eine Trennvorrichtung und ein Trennverfahren zum Trennen von Flüssigkeiten mit unterschiedlicher Dichte. Grundsätzlich funktioniert die darin beschriebene Vorrichtung nach dem gleichen Prinzip, nämlich dass ein adsorbierendes Material mit einer der beiden Flüssigkeiten gesättigt wird und dadurch in der anderen Flüssigkeit absinkt. Ein wesentlicher Unterschied besteht jedoch darin, dass bei dieser Vorrichtung der gesamte Volumenstrom das Trennbauteil, welches aus einem adsorbierenden Material besteht, passieren muss. Das Trennbauteil ist innerhalb eines Behälters derart angeordnet, dass es den Querschnitt des Behälters vollständig ausfüllt. Nachteilig bei dieser Vorrichtung ist aber die Reibung zwischen dem Trennbauteil und dem Behälter. Mit zunehmender Adsorption bzw. Verschmutzung des Trennbauteils, durch Temperaturänderungen und Druckschwankungen ändern sich auch die Reibungsverhältnisse, was wiederum Einfluss auf die Filterung und den notwendigen Energieaufwand hat. Die Vorrichtung ist dadurch fehleranfällig und es kann zu erhöhtem Wartungsaufwand kommen.

Die beschriebenen Vorrichtungen haben weiterhin den Nachteil, dass mit ihnen stark dispergierte oder sogar stark emulgierte Kondensate nicht zu behandeln sind. Es sind üblicherweise aufwändigere Verfahren notwendig, wie beispielsweise Membran-, Verdampfungs- oder Spaltverfahren.

Die Aufgabe der vorliegenden Erfindung besteht darin, eine Abscheidevorrichtung zu schaffen, die eine zuverlässige Abscheidung einer ersten Flüssigkeit aus einer zweiten Flüssigkeit ermöglicht, wobei die erste Flüssigkeit eine geringere spezifische Dichte als die zweite Flüssigkeit aufweist. Die Vorrichtung soll dabei möglichst einfach aufgebaut sein, die auch extremen Betriebsbedingungen standhält. Wartungsarbeiten wie z.B. die Kontrolle und Wechsel der Filter, sollen einfach und schnell möglich sein.

Erfindungsgemäß wird die Aufgabe dadurch gelöst, dass das Abscheideelement
- einen geringeren Durchmesser als der Behälter aufweist, so dass es mit einem seitlichen Abstand zur Innenwand schwimmt, und
- topfförmig mit einem Innenhohlraum und einer dem Einlass zugewandten Topföffnung ausgeführt ist, und
- ein Flüssigkeitsgemisch bestehend aus der ersten Flüssigkeit und der zweiten Flüssigkeit durch den Einlass in den Innenhohlraum einfüllbar ist, so dass die erste Flüssigkeit vom Abscheideelement adsorbiert werden kann.

Der wesentliche Vorteil der vorliegenden Erfindung besteht also darin, dass das Abscheideelement, das aus einem adsorbierenden Material besteht, ohne seitlichen Kontakt zur Behälterinnenwand auf der Oberfläche der bereits gefilterten Flüssigkeit schwimmt. Dadurch, dass die Flüssigkeit trotzdem durch das Abscheideelement geführt wird, sind alle Nachteile, die mit der Reibung des Abscheideelementes an der Innenwand des Behälters zusammenhängen, eliminiert. Bei zunehmender Adsorption nimmt das Gewicht bzw. die Masse des Abscheideelementes zu, so dass dieses immer tiefer in die umgebende Flüssigkeit absinkt. Das Filtermaterial oberhalb der Oberfläche der bereits gefilterten Flüssigkeit nimmt Öl durch Kapillarwirkung auf. Ein frühzeitiges Verblocken des von Kondensat durchströmten Filtermaterials wird verhindert, gleichzeitig befindet sich durch das kontinuierliche Absinken des Abscheideelementes stets reines ungesättigtes Filtermaterial in der Nähe der Oberfläche der umgebenden Flüssigkeit.

Erfindungsgemäß weist das Abscheideelement eine Topfform mit einem Innenhohlraum auf und wird von innen nach außen durchströmt, so dass freie Ölanteile, auch mit Dichten nahe 1 kg/dm³ zwangsweise in Kontakt mit dem Abscheideelement gebracht werden. Es entsteht somit eine selbstregulierende Anströmfläche, da bei zunehmender Kondensatmenge der Füllstand im Abscheideelement wegen erhöhendem Durchflusswiderstand steigt. Gleiches gilt bei zunehmender Erschöpfung des Abscheideelementes. Die Befüllung des Abscheideelementes erfolgt vorzugsweise zentral in den Innenhohlraum durch ein Führungsrohr, so dass ein seitliches Ausweichen des schwimmenden Abscheideelementes verhindert bzw. verringert wird.

Es hat sich auch als vorteilhaft erwiesen, wenn das Abscheideelement mit Hilfsmitteln, beispielsweise einer Abspannung zentral bzw. mittig gehalten ist, ein seitliches Wegschwimmen also auch dadurch ausgeschlossen ist.

Durch die erfindungsgemäße Ausgestaltung der Abscheidevorrichtung ist eine leistungsvermindernde Randströmung (Bypass) ausgeschlossen. Auch kann das Abscheideelement die Vorrichtung in der es angeordnet ist niemals endgültig verstopfen, da dann, wenn das Abscheideelement vollständig zugesetzt und undurchlässig ist, das zugeführte Flüssigkeitsgemisch aus dem Abscheideelement heraus und seitlich an dem Abscheideelement herunterläuft. Dadurch ist zwar die Filterwirkung aufgehoben, jedoch wird die Vorrichtung nicht blockiert.

Das Abscheideelement besteht vorzugsweise aus einem Material, das nahezu kein Wasser aufnimmt. Dies hat den Vorteil, dass die thermische Verwertung wegen der Wasserfreiheit sowie aufgrund der Materialwahl problemlos und außerdem nahezu rückstandsfrei möglich ist. Derartige Materialien sind bekannt, beispielsweise ist oleofiles Polypropylen verwendbar.

Die erfindungsgemäße Abscheidevorrichtung ist insbesondere dann besonders leistungsstark, wenn sie mit weiteren Abscheide- oder Filterkomponenten kombiniert wird. Beispielsweise ist es möglich, der Abscheidevorrichtung einen Vorabscheider vorzuschalten, in dem das Flüssigkeitsgemisch zunächst verweilt. Der Vorabscheider nimmt Sinkstoffe auf, wodurch eine leistungsmindernde Belastung der Filterstufen entfällt. Durch einen Bodenablass ist eine schnelle und leichte Reinigung des Vorabscheiders möglich.

Optional besteht auch die Möglichkeit, dass die im Vorabscheider aufschwimmenden freien Ölanteile durch ein Ölablaufrohr in einen separaten Auffangbehälter geleitet werden. Bei den meisten Ölsorten kann sich der größte Teil der freien Öle mit Wasseranteil innerhalb weniger als 60 Minuten an der Oberfläche absetzen. Durch Verschieben des Ölablaufrohres nach oben ist der Vorabscheider überlaufsicher, beispielsweise bei einem Wechsel des vollen Auffangbehälters. Die Differenzhöhe zwischen dem Ölablaufrohr und dem Einlass in den Behälter der Abscheidevorrichtung ist einstellbar. Damit kann der Dichte des Öles entsprechend immer die Schichtdicke eingestellt werden, die den Zulauf von Wasser in den Auffangbehälter bei schwallartigem Zulauf vermeidet.

Grundsätzlich sollten die beiden Filterstufen von oben nach unten gefahren werden. Ölanteile mit höherer Dichte als Wasser setzen sich dann nicht verstopfend in funktionsrelevante Kanäle.

Weiterhin ist es vorteilhaft, wenn das Abscheideelement als Vorfilter wirkt und innerhalb des Behälters ein Hauptfilter angeordnet ist. Dieser Hauptfilter ist vorzugsweise unterhalb des Abscheideelementes angeordnet. Die aus dem Abscheideelement austretende Flüssigkeit gelangt so zum Hauptfilter, passiert diesen und fließt durch den Auslass aus dem Behälter heraus. Der Hauptfilter ist derart an die Dimension des Behälters angepasst, dass die gesamte Flüssigkeit durch den Hauptfilter fließen muss. Er füllt vorzugsweise den gesamten Querschnitt des Behälters aus.

Das Abscheideelement und der Hauptfilter weisen eine an die jeweils durchströmende Flüssigkeit angepasste Dichte auf. Somit wird eine Kanalbildung und damit der Durchfluss der Flüssigkeit durch ein im Wesentlichen erschöpftes Element vermieden.

Weiterhin sind das Abscheideelement und der Hauptfilter bezüglich der Anströmflächen, der Mengen und Verweilzeiten auf den jeweiligen Anwendungsfall genau abgestimmt und wirtschaftlich ausgelegt. Auch der Hauptfilter besteht aus einem Filtermedium, das nahezu kein Wasser aufnimmt.

Vorteilhafterweise erfüllen das Abscheideelement und auch der Hauptfilter generell die vom Bundesministerium veröffentlichten "Anforderungen an Ölbinder".

Der Hauptfilter ist innerhalb des Behälters vorzugsweise derart angeordnet, dass der Zulauf und Ablauf der Flüssigkeit zentral erfolgt und jeweils die gesamte Querschnittsfläche des Hauptfilters zur Verfügung steht, so dass Randgängigkeit der Flüssigkeit (Bypass) vermieden wird.

Der Hauptfilter kann außerdem aus einem Material bestehen, dass Flüssigkeiten mit fein dispergierten, selbst emulgierten Ölen einleitfähig trennen kann. Beispielsweise sind oleofiles schmelzgesponnenes Polymer mit verteilungsorientierter Oberflächenverdichtung und -gestalt sowie Aktivkohle in angepasster Konsistenz und Größe zur Aufnahme feinster Öltröpfchen und oleofiles geschäumtes Polymer geeignet und vermeiden eine Verblockung durch einen Ölbelag am Filtermedium.

Vorteilhafterweise schließt sich an den Auslass des Behälters ein Steigkanal auf der Reinwasserseite an, der wiederum für lange Verweilzeiten und gute Verteilung der Flüssigkeit in den Filterstufen sorgt.

Um die Wartung zu erleichtern und auch eine ausgeglichene Abscheidung der Filterfähigkeit zu gewährleisten, können Niveaumelder vorgesehen sein, die die Erschöpfung der Abscheide- bzw. Filterstufen anzeigen. Beispielsweise ist das Abscheideelement vorzugsweise mit einem Niveaumelder versehen, der anzeigt, wie tief das Abscheideelement abgesunken ist. Weiterhin kann ein Niveaumelder das Anstauen von Flüssigkeit innerhalb des Abscheideelementes bzw. innerhalb des Hauptfilters anzeigen.

Die vorliegende Erfindung wird anhand der beigefügten Zeichnung näher erläutert. Die dargestellten Figuren sollen dabei lediglich beispielhaft zu verstehen sein und die Erfindung nicht beschränken.

Es zeigen:
- Fig. 1:: eine erste Ausführungsvariante einer Kondensataufbereitungsvorrichtung zur Abscheidung bzw. Trennung von Öl aus Wasser,
- Fig. 2:: eine zweite Ausführungsvariante einer erfindungsgemäßen Kondensataufbereitungsvorrichtung.

Die Fließrichtung der Flüssigkeiten ist durch die Pfeile angedeutet.

Beide in den Figuren gezeigten Kondensataufbereitungsvorrichtungen 20 verdeutlichen das Prinzip der erfindungsgemäßen Abscheidevorrichtung 22. Die Abscheidevorrichtung 22 befindet sich in einem Behälter 24, der einen Einlass 26 und einen Auslass 28 aufweist. Im dargestellten Ausführungsbeispiel befindet sich der Behälter 24 innerhalb eines Gehäuses 30. Er kann auch kürzer als dargestellt ausgeführt sein. Zwischen dem Behälter 24 und dem Gehäuse 30 kann optional auch eine Dichtung angeordnet sein. Der Behälter 24 kann aber auch derart ausgeführt sein, dass das Gehäuse 30 entfällt.

Die Abscheidevorrichtung 22 weist ein Abscheideelement 32 auf, dass zwischen dem Einlass 26 und dem Auslass 28 angeordnet ist, es befindet sich also oberhalb des Auslasses 28 und unterhalb des Einlasses 26. Das Abscheideelement 32 ist vorzugsweise topfförmig ausgeführt, wobei die Zuführung eines Flüssigkeitsgemisches 34 durch den Einlass 26 derart erfolgt, dass das Flüssigkeitsgemisch 34 von innen nach außen durch das Abscheideelement 32 geleitet wird. Der Einlass 26 befindet sich möglichst zentral in Bezug auf das topfförmige Abscheideelement 32. Dadurch wird erreicht, dass sich das Flüssigkeitsgemisch 34 gleichmäßig in einem Innenhohlraum 42 verteilt bzw. anstaut.

Erfindungswesentlich ist weiterhin, dass das Abscheideelement 32 äußere Abmessungen bzw. einen Querschnitt aufweist, die geringer sind, als ein innerer Querschnitt des Behälters 24. Das Abscheidelement 32 hat also keinen Kontakt mit einer Innenwand 36 des Behälters 24.

Das Flüssigkeitsgemisch 34 ist aus einer ersten Flüssigkeit 38 und einer zweiten Flüssigkeit 40 gebildet. Bei der ersten Flüssigkeit 38 handelt es sich vorzugsweise um ein Öl, bei der zweiten Flüssigkeit 40 dagegen um Wasser.

Wird nun das Flüssigkeitsgemisch 34 durch das Abscheideelement 32 geleitet, adsorbiert das Abscheideelement 32 die erste Flüssigkeit 38 und leitet die zweite Flüssigkeit 40 hindurch. Das Abscheideelement 32 ist derart ausgeführt, dass es auf der zweiten Flüssigkeit 40 dann schwimmt, wenn es keine oder wenig von der ersten Flüssigkeit 38 aufgenommen hat. Dies wird insbesondere dadurch erreicht, das die spezifische Dichte des Materials, aus dem das Abscheideelement 32 gebildet ist, gleich oder geringer als die spezifische Dichte der zweiten Flüssigkeit 40 ist.

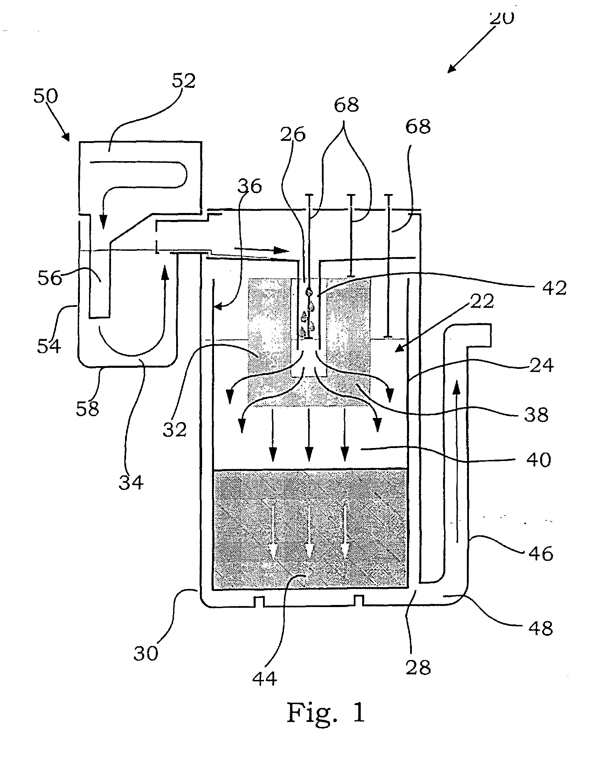

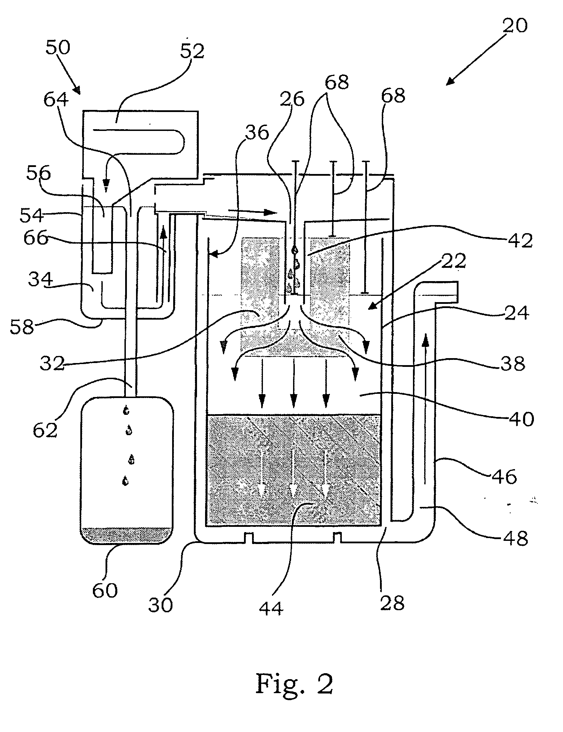

In den Figuren 1 und 2 befindet sich die Kondensataufbereitungsvorrichtung 20 bereits im Betrieb, so dass ein gewisser Anteil der zweiten Flüssigkeit 40 bereits durch das Abscheideelement 32 hindurchgeleitet wurde und das Abscheideelement 32 auf dieser zweiten Flüssigkeit 40 schwimmt bzw. in diese bereits abgesunken ist.

Das Abscheideelement 32 wird also aufgrund der Adsorption der ersten Flüssigkeit 38 zunehmend schwerer, so dass es in der zweiten Flüssigkeit 40 absinkt. Aufgrund einer Kapillarwirkung steigt die erste Flüssigkeit 38 innerhalb des Abscheideelementes 32 in den Bereich oberhalb des Flüssigkeitsspiegels der zweiten Flüssigkeit. Durch das stetige Absinken wird erreicht, dass die erste Flüssigkeit 38 stets mit reinem, noch unverbrauchtem und adsorptionsfähigem Material des Abscheideelementes 32 in Kontakt kommen kann.

Die beiden gezeigten Kondensataufbereitungsvorrichtungen 20 weisen beide einen dem Abscheideelement 32 bzw. der Abscheidevorrichtung 22 nachgeschalteten Hauptfilter 44 auf. Der Hauptfilter 44 befindet sich unterhalb des Abscheideelements 32 und ist derart ausgeführt, dass er den Behälter 24 im Querschnitt ausfüllt. Die gesamte aus der Abscheidevorrichtung 22 austretende zweite Flüssigkeit 40 ist also gezwungen, den Hauptfilter 44 zu passieren, um zum Auslass 28 zu gelangen. Der Hauptfilter 44 ist beispielsweise aus oleofilem schmelzgesponnenem Polymer mit verteilungsorientierter Oberflächenverdichtung und -gestalt, aus Aktivkohle in angepasster Konsistenz und Größe zur Aufnahme feinster Öltröpfchen oder aus oliofilem Polymer gefertigt. Dadurch ist der Hauptfilter 44 in der Lage, Kondensate mit feindispergiertem, sogar mit emulgierten Ölen zu trennen.

Zwischen dem Abscheideelement 32 und dem Hauptfilter 44 entsteht sozusagen eine Zwischenstufe der Aufbereitung. In dieser Zwischenstufe hat die aus dem Abscheideelement 32 austretende Flüssigkeit noch einmal eine Verweilmöglichkeit zur Abscheidung freier Anteile der noch nicht zurückgehaltenen ersten Flüssigkeit 38. Auch gelangen in diesem Bereich die noch zu filternden Anteile an die Außenfläche des Abscheideelementes 32.

Vorteilhafterweise schließt sich an den Hauptfilter 44 ein Steigrohr 46 an, in dem aus dem Hauptfilter 44 austretendes Reinwasser 48 aufsteigen kann. Das Steigrohr 46 bzw. der Steigkanal sorgt für lange Verweilzeiten und eine gute Verteilung der Flüssigkeiten in der Kondensataufbereitungsvorrichtung.

Beide Figuren zeigen weiterhin eine Ausführungsvariante, bei der der Abscheidevorrichtung 22 ein Vorabscheider 50 vorgeschaltet ist. Das Flüssigkeitsgemisch 34 fließt durch ein Einlaufelement 52 in einen Einlauftopf 54 und steigt in diesem auf. Das Einlaufelement 52 weist einen Stutzen 56 auf, der das Flüssigkeitsgemisch 34 nahe einem Boden 58 des Einlauftopfes 54 leitet. Der Vorabscheider 50 nimmt Sinkstoffe auf, was dazu führt, dass leistungsmindernde Belastungen der nachfolgenden Filterstufen entfallen. Aus dem Vorabscheider 50 fließt das Flüssigkeitsgemisch 34 dann durch den Einlass 26 dem Abscheideelement 32 zu.

Gemäß Figur 2 kann der Vorabscheider 50 auch derart ausgeführt sein, dass in ihm bereits aufschwimmende freie Ölanteile bzw. freie Anteile der ersten Flüssigkeit 38 abgeleitet werden. Hierzu ist ein separater Auffangbehälter 60 vorgesehen, der über eine Rohrleitung 62 mit dem Einlauftopf 54 verbunden ist. Eine Öffnung 64 der Rohrleitung 62 ist derart angeordnet, dass aufsteigende Anteile der ersten Flüssigkeit 38 durch die Öffnung 64 in die Rohrleitung 62 und schließlich in den Auffangbehälter 60 hineingelangen können. Das übrige Flüssigkeitsgemisch 34 wird über eine Steigleitung 66 dem Einlass 26 zugeleitet.

Weiterhin können Niveaumelder 68 vorgesehen sein, über die eine Erschöpfung des Abscheideelementes 32 und des Hauptfilters 44 anzeigbar sind. Eine Erschöpfung äußert sich durch Ansteigen des Flüssigkeitsniveaus im Innenhohlraum 42 des Abscheideelementes 32, durch Absinken des Abscheideelementes 32 und durch Anstauen des Flüssigkeitsniveaus im Behälter 24. Als Niveaumelder 68 sind handelsübliche Vorrichtungen einsetzbar.

Die erfindungsgemäße Abscheidevorrichtung 22 kann über den Einlass 26 mit dem Vorabscheider 50 sowie über den Auslass 28 mit dem Steigrohr 46 verbunden sein sowie den beschriebenen Hauptfilter 44 aufweisen. Alternativ ist es aber auch möglich, dass die Abscheidevorrichtung 22 mit nur einem oder einzelnen der genannten Elemente in Kombination verbunden ist. Die Verbindung mit den beschriebenen Komponenten ist vom jeweiligen Anwendungsfall abhängig.

Die Erfindung ist nicht auf die beschriebenen Ausführungsbeispiele beschränkt, sondern erstreckt sich auf alle gleichwirkenden Ausführungsvarianten.

Weitere Vorteile der Erfindung ergeben sich aus den nachfolgenden Patentansprüchen.

## Patentansprüche

1. Abscheidevorrichtung (22) zum Abscheiden einer ersten Flüssigkeit aus einer zweiten Flüssigkeit, wobei die erste Flüssigkeit eine geringere spezifische Dichte als die zweite Flüssigkeit aufweist, mit
- einem Behälter (24) mit einer Innenwand (36),
- einem Einlass (26) und einem Auslass (28), wobei der Einlass (26) oberhalb des Auslasses (28) angeordnet ist,
- einem Abscheidelement (32) aus einem durchlässigen Filtermaterial, das
- in der Lage ist, die erste Flüssigkeit (38) zu adsorbieren, und
- innerhalb des Behälters (24) zwischen dem Einlass (26) und dem Auslass (28) angeordnet ist,
- derart ausgeführt ist, dass es im reinen Zustand auf der zweiten Flüssigkeit (40) schwimmt, bei zunehmender Adsorption der ersten Flüssigkeit (38) jedoch absinkt
**dadurch gekennzeichnet, dass** das Abscheideelement (32)
- einen geringeren Durchmesser als der Behälter (24) aufweist, so dass es mit einem seitlichen Abstand zur Innenwand (36) schwimmt, und
- topfförmig mit einem Innenhohlraum (42) und einer dem Einlass (26) zugewandten Topföffnung ausgeführt ist, und
- ein Flüssigkeitsgemisch (34) bestehend aus der ersten Flüssigkeit (38) und der zweiten Flüssigkeit (40) durch den Einlass (26) in den Innenhohlraum (42) einfüllbar ist, so dass die erste Flüssigkeit (38) vom Abscheideelement (32) adsorbiert werden kann.

2. Abscheidevorrichtung (22) nach Anspruch 1, **dadurch gekennzeichnet, dass** das Abscheideelement (32) in seiner Mittelachse geführt und damit im Behälter (24) gehalten ist.

3. Abscheidevorrichtung (22) nach Anspruch 1 oder Anspruch 2, **dadurch gekennzeichnet, dass** innerhalb des Behälters (24) ein Hauptfilter (44) angeordnet ist, der zwischen dem Abscheideelement (32) und dem Auslass (28) angeordnet und derart ausgeführt ist, dass die aus dem Abscheideelement (32) austretende zweite Flüssigkeit (40) durch den Hauptfilter (44) zum Auslass (28) geleitet wird.

4. Abscheidevorrichtung (22) nach Anspruch 3, **dadurch gekennzeichnet, dass** sich an den Auslass (28) ein Steigrohr (46) anschließt, in dem aus dem Hauptfilter (44) austretendes Reinwasser (48) aufsteigt.

5. Abscheidevorrichtung (22) nach einem der Ansprüche 1 bis 4, **dadurch gekennzeichnet, dass** der Einlass (26) mit einem Vorabscheider (50) verbunden ist, in dem Sinkstoffe aus dem Flüssigkeitsgemisch (34) abgeschieden werden.

6. Abscheidevorrichtung (22) nach Anspruch 5, **dadurch gekennzeichnet, dass** der Vorabscheider (50) derart ausgeführt ist, dass auch freie Anteile der ersten Flüssigkeit (38) abgeschieden werden.

7. Abscheidevorrichtung (22) nach einem der Ansprüche 1 bis 6, **dadurch gekennzeichnet, dass** Niveaumelder (68) vorgesehen sind, die eine Erschöpfung des Abscheideelementes (32) anzeigen.

8. Abscheidevorrichtung (22) nach einem der Ansprüche 1 bis 7, **dadurch gekennzeichnet, dass** Niveaumelder (68) vorgesehen sind, die eine Erschöpfung des Hauptfilters (44) und/oder des Abscheideelementes (32) anzeigen.

## Claims

1. Separating device (22) for separating a first liquid from a second liquid, wherein the first liquid has a lower specific density than the second liquid, having
- a receptacle (24) with an inside wall (36);
- an inlet (26) and an outlet (28), wherein the inlet (26) is arranged above the outlet (28);
- a separating member (32) made of a permeable filter material that
- is capable of adsorbing the first liquid (38); and
- is arranged within the receptacle (24) between the inlet (26) and the outlet (28);
- is configured in such a manner that it floats, when it is clean, on the second liquid (40), but is sinking with increasing adsorption of the first liquid (38),
**characterized in that** the separating member (32)
- has a smaller diameter than the receptacle (24) so that there is a lateral distance between the inside wall (36) and the floating separating member (32), and
- is pot-shaped and has an internal cavity (42) and a pot opening that is oriented towards the inlet (26)
- a liquid mixture (34) consisting of the first liquid (38) and the second liquid (40) is filled into the international cavity (42) through the inlet (26) in such a manner the separating member (32) can adsorb the first liquid (38).

2. Separating device (22) according to claim 1, **characterized in that** the separating member (32) is guided in its center line and thus held within the receptacle (24).

3. Separating device (22) according to claim 1 or claim 2, **characterized in that** a main filter (44) is arranged within the receptacle (24) between the separating member (32) and the outlet (28) and is configured in such a manner that the second liquid (40) leaving the separating member (32) is passed through the main filter (44) to the outlet (28).

4. Separating device (22) according to claim 3, **characterized in that** a riser (46) is arranged downstream the outlet (28) in which riser (46) the pure water (48) leaving the main filter (44) rises.

5. Separating device (22) according to any one of claims 1 to 4, **characterized in that** the inlet (26) is connected to a preseparator (50) in which suspended matter is separated from the liquid mixture (34).

6. Separating device (22) according to claim 5, **characterized in that** the preseparator (50) is configured in such a manner that free proportions of the first liquid (38) are also separated.

7. Separating device (22) according to any one of claims 1 to 6, **characterized in that** level indicators (68) are provided that indicate the exhaustion of the separating member (32).

8. Separating device (22) according to any one of claims 1 to 7, **characterized in that** level indicators (68) are provided that indicate the exhaustion of the main filter (44) and/or of the separating member (32).

## Revendications

1. Dispositif de séparation (22) destiné à séparer un premier liquide d'un deuxième liquide, ledit premier liquide présentant une densité spécifique inférieure à celle du deuxième liquide, comprenant:
- un réservoir (24) avec une paroi intérieure (36),
- une entrée (26) et une sortie (28), ladite entrée (26) étant située au-dessus de la sortie (28),
- un élément séparateur (32) réalisé dans une matière filtrante perméable, qui
- est apte à adsorber le premier liquide (38) et
- est disposé à l'intérieur du réservoir (24) entre l'entrée (26) et la sortie (28),
- est réalisé de telle manière qu'il nage, lorsqu'il est propre, sur ledit deuxième liquide (40), mais qu'il descend avec une adsorption croissante du premier liquide (38),
**caractérisé par le fait que** ledit élément séparateur (32)
- présente un diamètre inférieur à celui du réservoir (34) de sorte qu'il y a une distance latérale entre la paroi intérieure (36) et l'élément séparateur nageant, et
- est réalisé de manière à présenter la forme d'un pot avec une cavité intérieure (42) et une ouverture de pot montrant vers l'entrée (26), et
- un mélange de liquides (34) se composant du premier liquide (38) et du deuxième liquide (40) peut être introduit par ladite entrée (26) dans la cavité intérieure (42) de sorte que le premier liquide (38) peut être adsorbé par l'élément séparateur (32).

2. Dispositif de séparation (22) selon la revendication 1, **caractérisé par le fait que** ledit élément séparateur (32) est guidé dans son axe médian et est maintenu ainsi dans le réservoir (24).

3. Dispositif de séparation (22) selon la revendication 1 ou la revendication 2, **caractérisé par le fait qu'**à l'intérieur du réservoir (24) est disposé un filtre principal (44) qui est placé entre l'élément séparateur (32) et la sortie (28) et est réalisé de manière à ce que ledit deuxième liquide (40) sortant de l'élément séparateur (32) soit dirigé à travers ledit filtre principal (44) vers la sortie (28).

4. Dispositif de séparation (22) selon la revendication 3, **caractérisé par le fait que** la sortie (28) est suivie d'un tuyau ascendant (46) dans lequel monte l'eau pure (48) sortant du filtre principal (44).

5. Dispositif de séparation (22) selon l'une des revendications 1 à 4, **caractérisé par le fait que** ladite entrée (26) est reliée à un pré-séparateur (50) dans lequel des matières en suspension sont séparées du mélange de liquides (34).

6. Dispositif de séparation (22) selon la revendication 5, **caractérisé par le fait que** ledit pré-séparateur (50) est réalisé de manière à ce que des portions libres du premier liquide (38) soient séparées également.

7. Dispositif de séparation (22) selon l'une des revendications 1 à 6, **caractérisé par le fait que** l'on prévoit des indicateurs de niveau (68) qui indiquent un épuisement dudit élément séparateur (32).

8. Dispositif de séparation (22) selon l'une des revendications 1 à 7, **caractérisé par le fait que** l'on prévoit des indicateurs de niveau (68) qui indiquent un épuisement du filtre principal (44) et/ou de l'élément séparteur (32).
